# EUROPEAN PATENT SPECIFICATION

(11) **EP 3 512 679 B1**
(45) Date of publication and mention of the grant of the patent: **28.10.2020**
(21) Application number: 17771387.2
(22) Date of filing: 14.09.2017
(51) Int. Cl.: B29C 31/04, B29C 43/34

(54) **ELEMENT FOR TRANSFERRING DOSED BODIES OF POLYMERIC MATERIAL BY DROPPING FOR COMPRESSION MOLDING LINES**
ELEMENT ZUR ÜBERTRAGUNG VON DOSIERTEN KÖRPERN AUS POLYMEREM MATERIAL DURCH FALLENLASSEN FÜR PRESSFORMANLAGEN
ÉLÉMENT DE TRANSFERT DE CORPS DOSÉS DE MATÉRIAU POLYMÈRE PAR CHUTE POUR LIGNES DE MOULAGE PAR COMPRESSION

(30) Priority: 15.09.2016 IT 201600092917
(43) Date of publication of application: 24.07.2019
(73) Proprietor: Sacmi Imola S.C., 40026 Imola (IT)
(72) Inventor: MARASTONI, Daniele, 40017 SAN GIOVANNI IN PERSICETO (IT); CARATI, Marco, 40026 IMOLA (IT)
(74) Representative: Modiano, Micaela Nadia
(86) International application number: PCT/EP2017/073126
(87) International publication number: WO 2018/050740

(56) References cited:
- EP-A1- 2 404 732
- US-A- 3 976 414

## Description

The present invention relates to an element for transferring bodies of polymeric material in the melted state by dropping, for compression molding lines, in particular for transferring such bodies from a dispenser of polymeric bodies of discrete length to a respective mold cavity.

The invention also relates to a transfer carousel that comprises such element and a compression molding line that comprises such carousel.

It is known to form a polymeric object by way of compression molding, carried out by inserting a male plug, which constitutes the male mold element, into a hollow female mold part, which constitutes the female mold element and which contains a body of polymeric material in the melted state, in particular in a paste-like state, of equal mass to that of the object that it is desired to form. The material is typically a thermoplastic resin.

The male plug and the hollow female mold part are contoured so as to leave an interspace between them when the former is inserted into the latter. Such interspace is filled by the polymeric material that constitutes the body as a result of the insertion of the male plug into the female mold part, thus forming the final object. Such object can consist of a preform of a bottle, which after compression molding can be picked up in order to be fed to another processing station, for example a heat treatment station, an oven and/or a blower, or in order to be stored.

These lines can carry out the molding continuously, by having the molds mounted on a rotating compression molding carousel that carries a plurality of hollow female mold parts on its peripheral region and, above them, a plurality of corresponding male plugs that rotate integrally with the female mold parts about the central vertical axis of the carousel.

Such molding carousel is associated, upstream, with a device for emitting bodies of polymeric material in a dosed quantity, here also referred to as doses, which are obtained starting from an extruder that produces a continuous extruded mass of polymeric material in the melted state which exits from a dispensing nozzle. This extruded element made of polymeric material exiting from the dispenser is divided by way of a cutting device so as to obtain the doses of polymeric material.

The doses are then picked up by transfer elements arranged on a rotating transfer carousel, which are adapted as well to release each dose of plastic material taken from it into a respective hollow female mold part of the molds of the molding carousel. Such transfer elements comprise a transfer duct, in which the dose that the manipulation element has taken from the dispenser is guided in its descent, for example, through a concave wall that strikes the dose immediately after this has been released from the dispenser, pushes it with a horizontal component, and guides it toward the transfer duct.

Conventional compression molding lines are not devoid of drawbacks, among which is the fact that, while it is passing through such transfer duct, the dose of polymeric material can rub or bump against its inner surface, thus degrading the shape of the dose, altering its orientation and/or slowing its descent toward the respective hollow female mold part of the compression molds.

A solution to solve such drawback has been proposed in EP 2404732 A1, which discloses a transfer element according to the preamble of claim 1 and a method according to the preamble of claim 13 and teaches to have the transfer duct at a greater pressure than that of the compression mold, for example by closing the duct in an upper region and introducing compressed air through radial holes made in the side walls of the duct.

This solution also is not without drawbacks, which include the fact that the gaseous stream applied to the dose in the transfer duct is directed exclusively radially with respect to the dose, leading to a non-optimal use of the duct.

The aim of the present invention is to provide an element for transferring bodies of polymeric material in the melted state by dropping, for compression molding lines, and also a transfer carousel that comprises such element and a compression molding line that comprises such carousel, which are capable of improving the known art in one or more of the above mentioned aspects.

Within this aim, an object of the invention is to provide an element for transferring bodies of polymeric material by dropping, for compression molding lines, which is adapted to facilitate an accelerated or delayed transfer of the dose inside the duct of the transfer element.

Another object of the invention is to provide an element for transferring bodies of polymeric material by dropping, for compression molding lines, which is adapted to reduce the angle of transfer of the dose toward the molding carousel, thus increasing the number of active molds and therefore the speed of the machine itself.

Another object of the invention is to provide an element for transferring bodies of polymeric material by dropping, for compression molding lines, which is adapted optionally to create a cushion of air or of other fluid around the dose during the transfer.

A still further object of the present invention is to overcome the known drawbacks in a different manner to the existing solutions.

Another object of the invention is to provide an element for transferring bodies of polymeric material in the melted state by dropping, for compression molding lines, and also a transfer carousel that comprises such element and a compression molding line that comprises such carousel, which are highly reliable, easy to implement and maintain, and low cost.

This aim and these and other objects which will become better apparent hereinafter are achieved by an element for transferring bodies of polymeric material in the melted state for compression molding lines according to claim 1, and also by a transfer carousel according to claim 11, by a compression molding line according to claim 12 and by a method according to claim 13.

Further characteristics and advantages of the invention will become better apparent from the detailed description that follows of a preferred, but not exclusive, embodiment of the element for transferring bodies of polymeric material in the melted state for compression molding lines, according to the invention, and also of a transfer carousel and a compression molding line which comprise such element, which are illustrated, by way of non-limiting example, in the accompanying drawings, wherein:

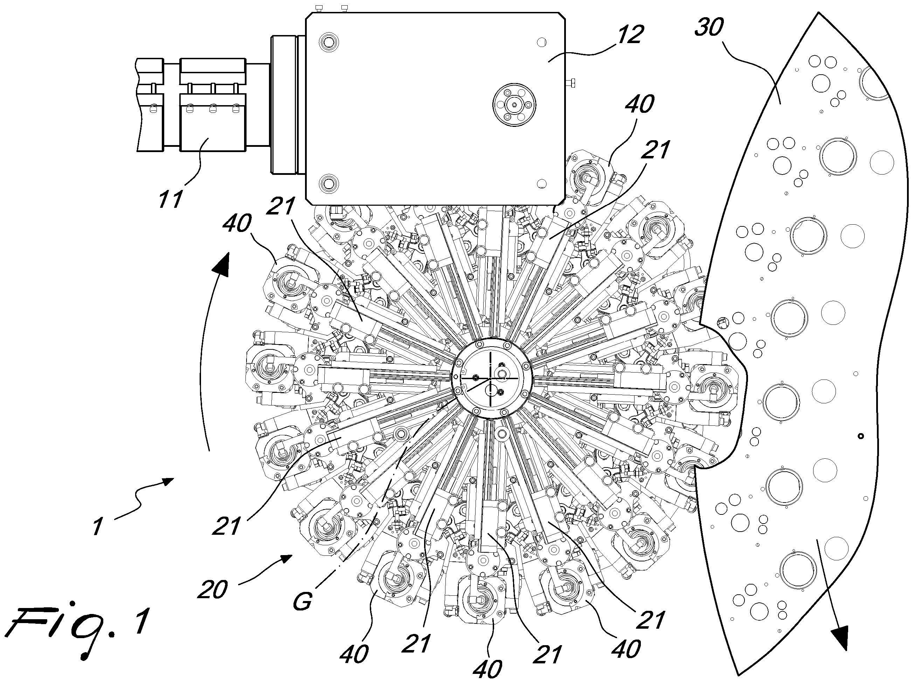

Figure 1 is a plan view from above of a compression molding line according to the invention;

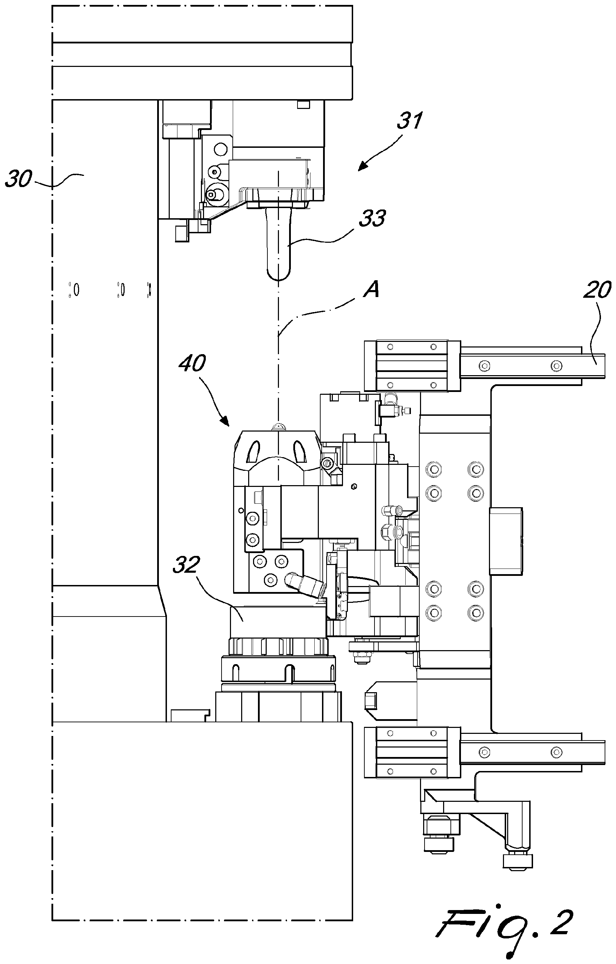

Figure 2 is a side view of the line in the previous figure, at the region of intersection of the trajectories of the molding carousel and of the transfer carousel;

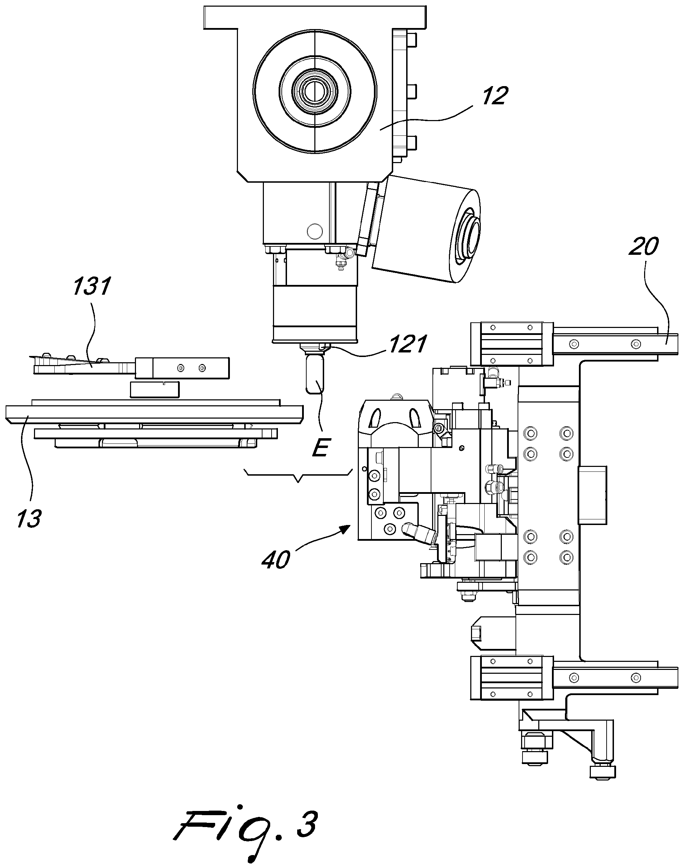

Figure 3 is a detailed side view of the dispenser of polymeric material and of the corresponding cutting device;

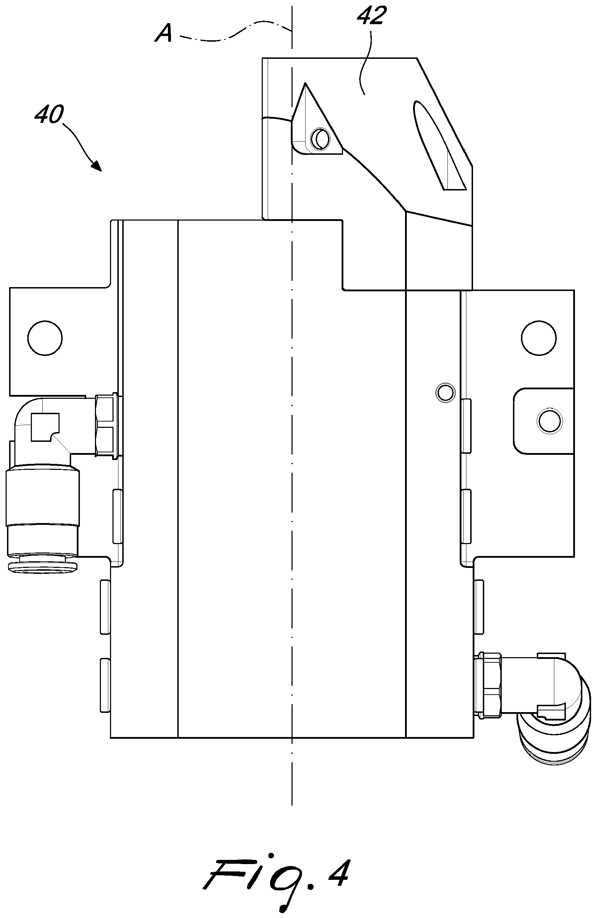

Figure 4 is a side view of a transfer element according to a first embodiment of the invention;

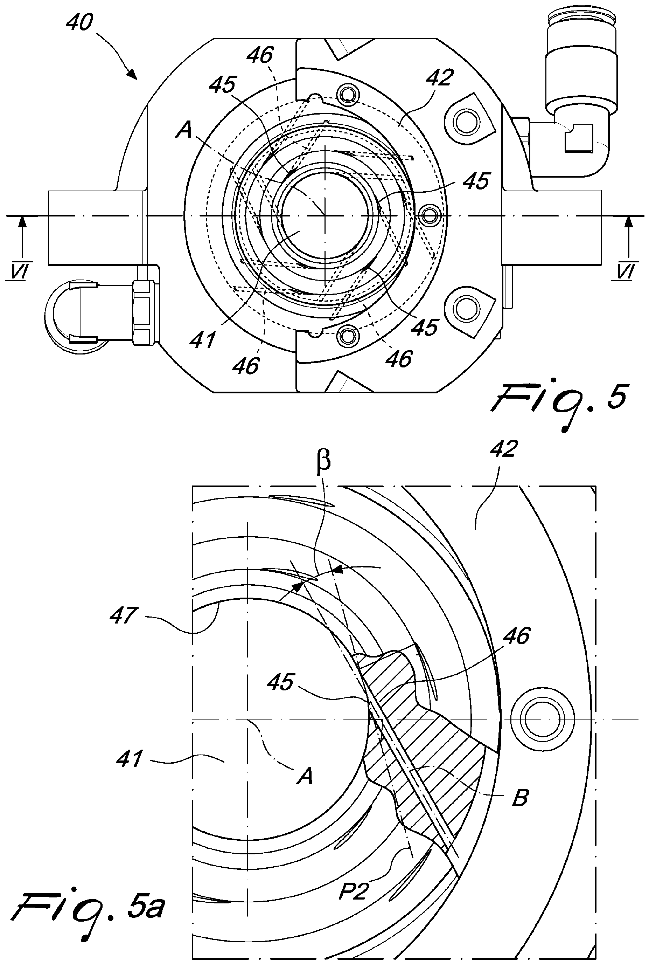

Figure 5 is a plan view from above of the transfer element in the previous figure;
Figure 5a is a detail view of Figure 5;
Figure 6 is a cross-sectional view taken along the line VI-VI of the transfer element in Figure 5;
Figure 7 is a side view of a transfer duct according to a second embodiment of the invention;
Figure 8 is an axial cross-sectional view of the transfer duct in the previous figure;
Figure 9 is a cross-sectional view taken along the line IX-IX of the transfer duct in Figure 7;
Figure 10 is an axial cross-sectional view of a transfer duct according to a third embodiment of the invention;
Figure 11 is a detail view of the previous figure;
Figure 12 is an axial cross-sectional view of a transfer duct according to a fourth embodiment of the invention;
Figure 13 is an axial cross-sectional view of a transfer element according to a fifth embodiment of the invention;

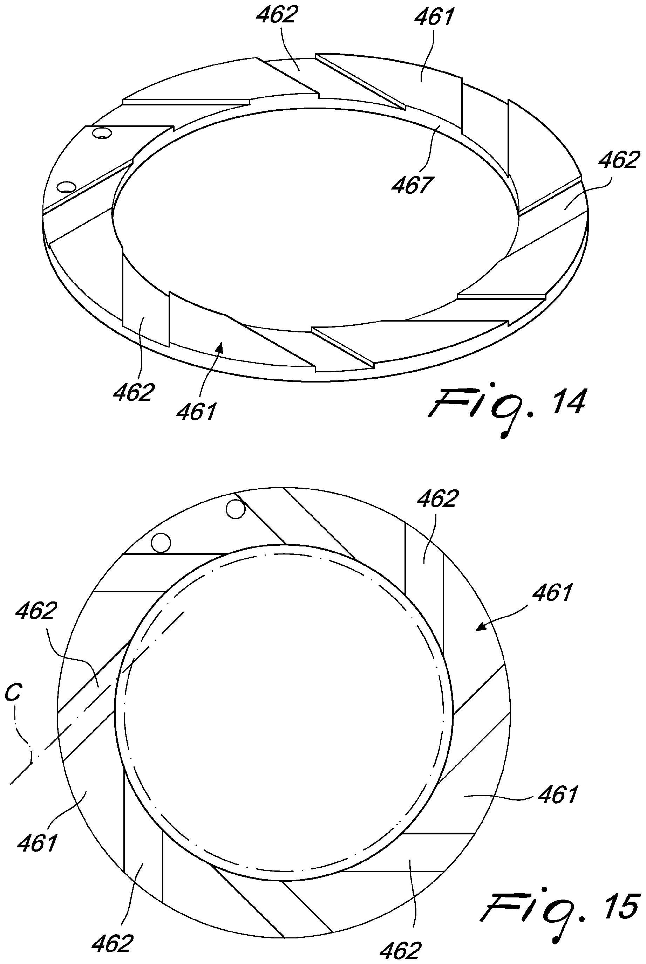

Figure 14 is perspective view of one of the grooved rings of the transfer duct in the previous figure;
Figure 15 is a plan view from above of the grooved ring in the previous figure.

With reference to the figures, a continuous compression molding line according to the invention, generally designated by the reference numeral 1 for all the embodiments described, is particularly adapted to the forming of preforms in order to obtain containers made of polymeric material, such as bottles or phials.

In all the embodiments described, the line 1 comprises an extruder 11, a dispenser 12, a cutting device 13, a transfer carousel 20 and a compression molding carousel 30.

The line 1 further comprises, angularly spaced apart from the transfer carousel 20 along the peripheral region of the molding carousel 30, a station (not shown) for extracting compression-molded objects from the molding carousel 30; these objects can subsequently be thermally conditioned, formed further by way of blow-molding, and/or stored.

The extruder 11 is conventional per se, and is adapted to heat the polymeric material to a temperature adapted to bring it to a melted state, more or less viscous, and to dispense it continuously through a nozzle 121 of the dispenser 12. The polymeric material can be a thermoplastic resin, preferably PET, and in this case the temperature to which such material is brought in the extruder in order to obtain the melted polymer can be comprised between 270°C and 300°C. Such temperature can be advantageously reduced by way of adapted heat exchangers to 230°C in output from the nozzle 121 so as to reduce the energy to be removed in the step of cooling the product and as a consequence speed up the machine, as described in WO 01/66327 A2.

By way of a cutting device 13 associated with the dispenser 12, the continuous extruded mass E of polymeric material in the melted state exiting from the nozzle 121 of the dispenser 12 is divided into a succession of dosed bodies D of polymeric material, here also referred to as doses, in a way that is known per se.

The cutting device 13, which is also known per se, can comprise one or more blades 131 which rotate with respect to a vertical axis and whose circular trajectory intercepts the axis of the dispensing nozzle 121 proximate to the latter, so as to cut the extruded mass E in a dose D at each pass of a respective cutter 131.

In all the embodiments described, the molding carousel 30 rotates continuously about a vertical central axis parallel to the axis G of the transfer carousel 20 and comprises a plurality of compression molds 31 that are angularly spaced apart along all the peripheral region of the carousel 30, and are made to rotate about the central axis of the carousel 30 along a circular path that extends on a horizontal plane. Each mold 31 comprises a lower hollow female mold part 32 and an upper male plug 33, which constitute respectively the female mold part and the male mold part of the mold 31 and can be moved mutually closer during the rotation of the carousel 30 in order to compress the dose D received by the hollow female mold part 32 by way of the penetration into such mold part of the male plug 33, and thus form the desired object made of polymeric material. Such object is preferably a preform, conventional per se, and is adapted to be used to provide bottles in thermoplastic resin by way of blow-molding. The preform obtained from the molds 31 is therefore a beaker-shaped object, provided with a neck with the final shape of the bottle to be obtained and with a hollow body that can be expanded by way of stretch-blow molding techniques that are conventional per se.

In all the embodiments described, the transfer carousel 20, which rotates continuously about an axis G, comprises along its peripheral region a plurality of angularly equidistant transfer elements 40, which describe a substantially circular trajectory that is partially superimposed on the substantially circular trajectory described by the hollow female mold parts 32 of the molds of the molding carousel 30.

The transfer elements 40 are preferably connected to a central shaft by way of respective arms 21.

In all the embodiments described, each transfer element 40 of the dosed bodies D comprises an internal guiding duct 41, 141, 241, 341 or 441 that extends along a first axis A that connects an inlet 43, 143, 243, 343, 443 through the dosed body D to an outlet 44, 144, 244, 344, 444 of the same body D. The guiding duct 41, 141, 241, 341, 441 is adapted to guide, during its drop from the dispenser, the dosed body D from the inlet 43, 143, 243, 343, 443 to the outlet 44, 144, 244, 344, 444 and it can be associated with means of conditioning temperature and/or humidity in order to improve efficiency.

The guiding duct 41, 141, 241, 341, 441 is defined by a side wall 48, 148, 248, 348, 448 that surrounds the free internal volume of the duct 41, 141, 241, 341, 441 and whose internal surface 47, 147, 247, 347, 447 is substantially tubular, for example cylindrical, frustum-shaped (as in the surface 147 of the second embodiment), flared (symmetrically or asymmetrically), and partially frustum-shaped/flared and partially cylindrical (as in the first, third, fourth and fifth embodiments).

Preferably, the flaring of the internal tubular surface 47, 147, 247, 347, 447 affects at least the upper part that leads to the inlet 43, 143, 243, 343, 443 so as to increase the extension of such inlet and thus facilitate the drop of the dosed body D into the guiding duct 41, 141, 241, 341, 441.

In a position adjacent to the inlet 43, 143, 243, 343, 443, externally to the guiding duct 41, 141, 241, 341, 441, there can be a protruding concave wall 42 (shown only in the drawings of the first embodiment), which is adapted to bump against the dosed body D after this has been cut from the extruded mass released by the dispenser 12, pushing it with a horizontal component and thus guiding it toward the duct 41, 141, 241, 341, 441. The concave wall 42 can optionally be provided with means of sliding using rollers, as described in WO 2009/027777 A1

Each transfer element 40 is connected to means of feeding a fluid, for example air, to the guiding duct 41, 141, 241, 341, 441, not shown, which can consist substantially of a generator of a flow of air or of another fluid, for example a fan or a compressor.

The internal tubular surface 47, 147, 247, 347, 447 of the guiding duct 41, 141, 241, 341, 441 comprises a plurality of holes 45, 145, 245, 345a, 445a-445b that are distributed substantially uniformly on at least part of the internal tubular surface 47, 147, 247, 347, 447. Such holes 45, 145, 245, 345a, 445a-445b communicate with the above mentioned fluid feeder means through respective through channels 46, 146, 246, 346, 446, 462 that pass through the side wall 48, 148, 248, 348, 448 of the duct 41, 141, 241, 341, 441. The peculiarity of these channels 46, 146, 246, 346, 446, 462 is that at least some of them extend starting from the hole and toward the inside of the side wall 48, 148, 248, 348, 448 substantially along a second axis B or C which is oblique with respect to the first axis A of the guiding duct 41, 141, 241, 341, 441, i.e. the directions of such second axes B do not intercept the axis A and, preferably, they are also not parallel to a geometric plane P1 that is perpendicular to the axis A.

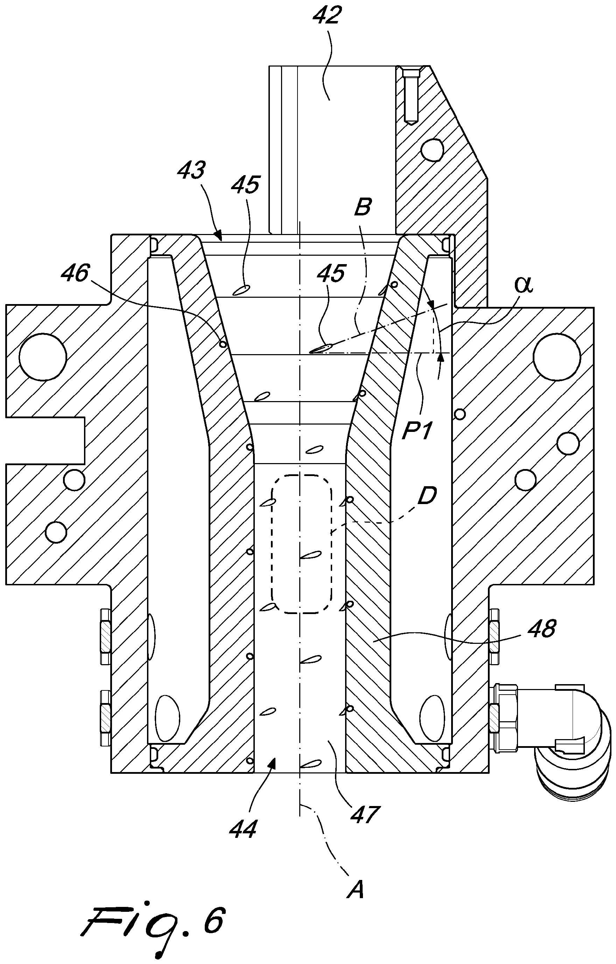

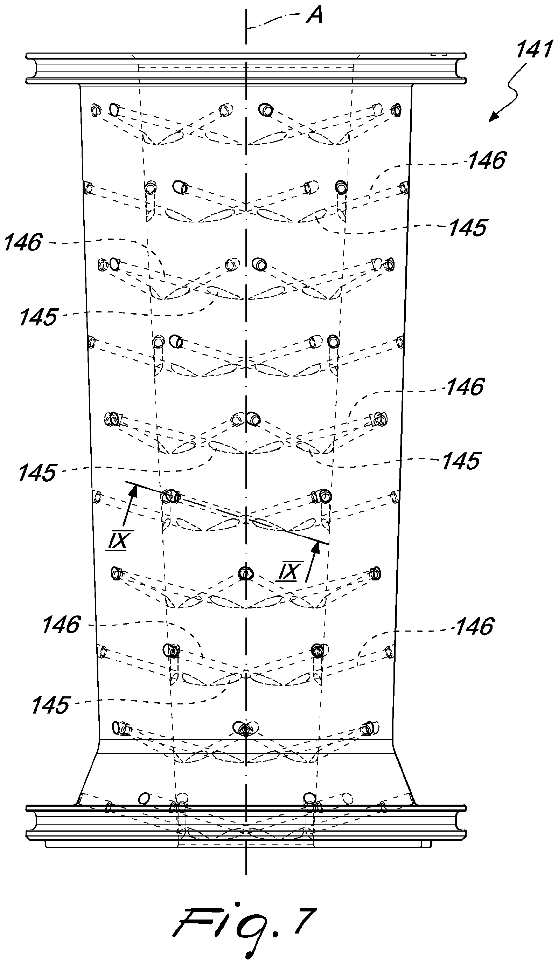

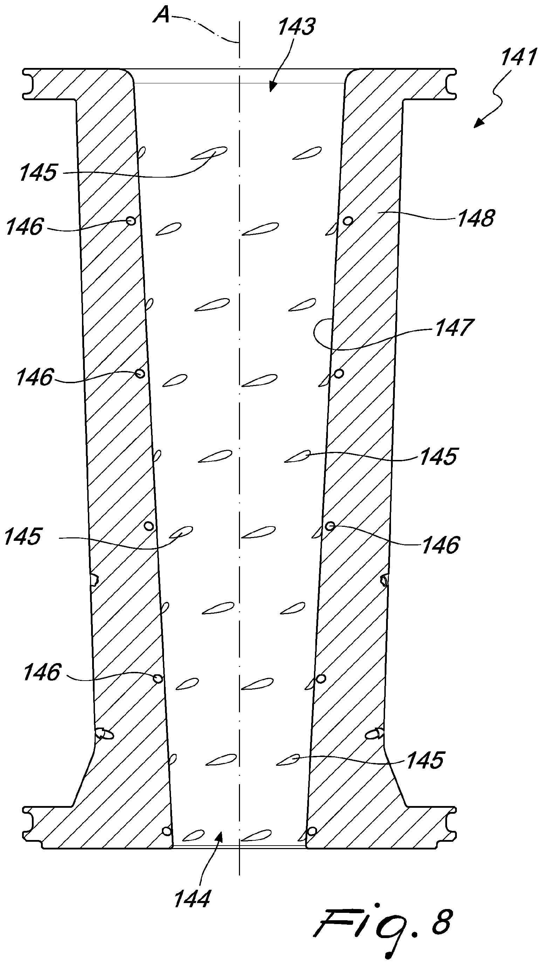

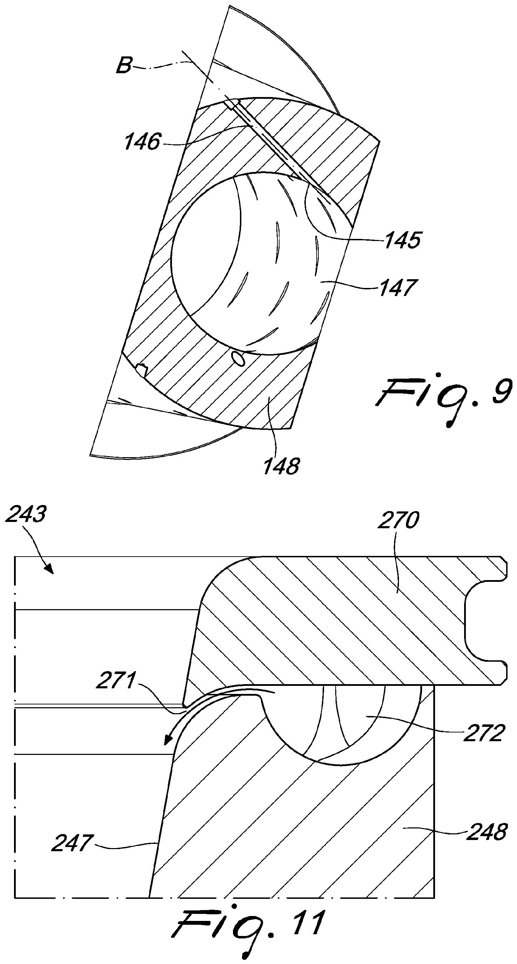

For example, in the first two embodiments in Figures 6-9, the holes 45, 145 are distributed uniformly and preferably offset along the entire internal tubular surface 47, 147 of the duct 41, 141, and all the corresponding channels 46, 146 lead into them with an axis B that is oblique with respect to the first axis A of the duct 41, 141.

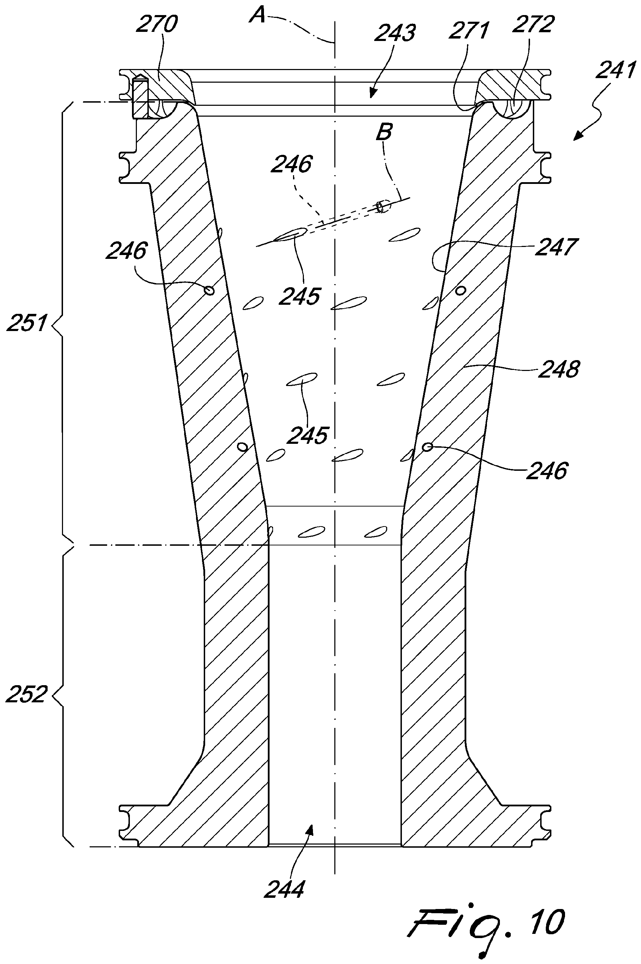

In the third embodiment in Figure 10, all the channels 246 lead into the holes 245 with an axis B that is oblique with respect to the first axis A of the duct 241, but the holes 245 are distributed uniformly and preferably offset only on a first tubular band of the internal tubular surface 247, in particular on the band 251 that leads to the inlet 243 of the dosed body D and which is substantially frustum-shaped. The second, remaining, tubular band 252 on the other hand has no holes up until the outlet 244 and is substantially cylindrical.

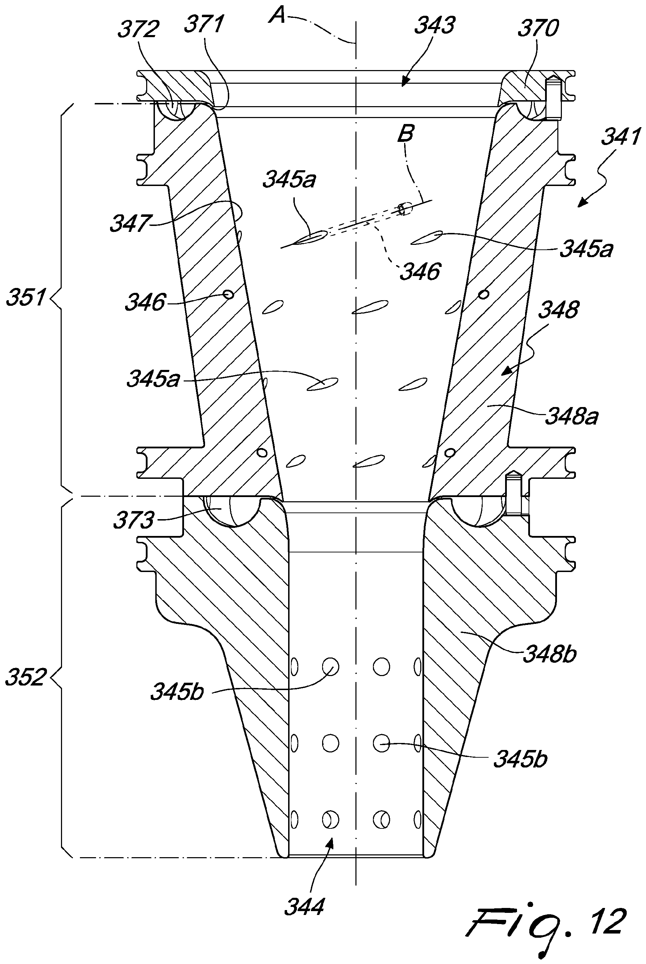

In the fourth embodiment in Figure 12, only some of the channels 346 lead into the holes 345a with an axis B that is oblique with respect to the first axis A of the duct 341. Such holes 345a are distributed uniformly and preferably offset only on a first tubular band of the internal tubular surface 347, in particular on the band 351 that leads to the inlet 343 for the dosed body D and which is substantially frustum-shaped.

The second, remaining, tubular band 352 of the surface 347, substantially cylindrical, on the other hand has a plurality of holes 345b for evacuating the air or other fluid, and optionally are connected to an intake pump and are adapted to direct the stream of air or other fluid away from the first axis A, differently from the holes 345a through which, on the other hand, the air or other fluid is injected toward the axis A. The purpose of such evacuation holes 345b is to prevent a falling dose D from rebounding or not completing the descent once it has entered the cavity of the mold, owing to too much thrust on the high part of the dose D or owing to the presence of the air or other fluid injected into the duct 341 which reaches the cavity of the mold before the dose and creates a cushion between the bottom of the cavity of the mold and such dose D, thus impeding its descent. Through holes 345b for evacuating the air or other fluid injected via the holes 345a, it is possible in this way to add further evacuation channels of the air or other fluid beyond the outlet 344.

The evacuation channels that connect the holes 345b to the outside of the duct 341, which are not shown, extend along substantially radial axes, but in other embodiments they can be inclined or partially radial and partially inclined, for example along a direction that converges toward the axis A away from the outlet 344.

In the example shown, the side wall 348 of the duct 341 is defined by two superimposed monolithic bodies 348a and 348b which comprise respectively the first tubular band 351 and the second tubular band 352 of the internal tubular surface 347 of the duct 341.

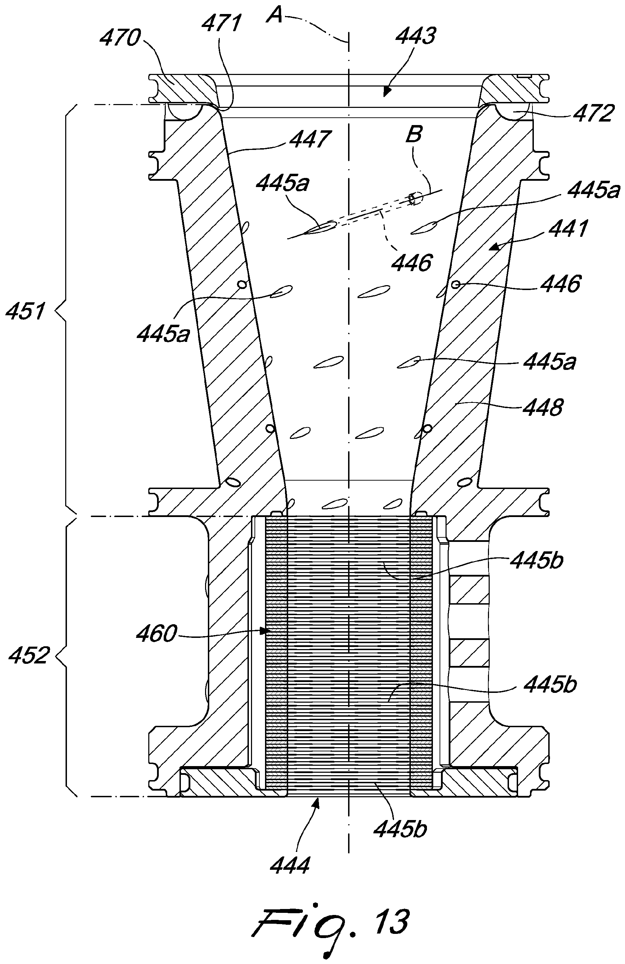

In the fifth embodiment shown in Figure 13, the duct 441 is at least partially constituted by a stack 460 of flat rings. Some of such rings 461 have, on at least one of the two flat faces, a plurality of grooves 462 that are adapted to make the air or the fluid fed from outside pass toward the inside of the ring 461. Such grooves 462 extend on a respective third axis C with the same inclination with respect to the tangent at the point of intersection of such third axis C with the inner circumference of the ring 461. In the case shown, the third axes C are parallel to a plane P1 that is perpendicular to the first axis A of the duct and are skewed with respect to such axis A, so that, when the rings 461 are stacked in the stack 460, the grooved rings define skewed channels and through openings 445b that pass from the internal tubular surface to the stack 460 and on to the external surface of the stack 460.

Alternatively, the third axes C could all have a radial direction toward the first axis A, so as to define radial channels in the stack 460 at the grooved rings of the stack.

In the fifth embodiment, the portion of the duct 441 that is composed by the stack 460 affects the lower band 452 of the channel 441, while the upper band 451 which leads to the inlet 443 is formed by a monolithic body 448, in which the through channels 446 are provided and against which the stack 460 is clamped so as to define the internal tubular surface 447 with no points of internal surface discontinuity between the internal tubular surface of the monolithic body 448 and that of the stack 460.

The channels 446 lead into the holes 445a with a second axis B which is oblique with respect to the first axis A of the duct 441. Such holes 445a are distributed uniformly and preferably offset.

Advantageously, around the internal tubular surface of the guiding duct 247, 347, 447 there can be an annular slit 271, 371, 471, for example by way of an annular chamber 272, 372, 472 defined between a bushing 270, 370, 470 and a convex surface blended with the internal tubular surface 247, 347, 447. Such annular chamber 272, 372, 472 can be connected with the means of feeding the air, which also feed the channels 246, 346, 446, or with other means of feeding air, so as to generate a "blade" of air, substantially conical, that converges toward the axis A of the duct 241, 341, 441 in the direction of the outlet 244, 344, 444. The puffs can have different starts, ends, duration, and feed pressure.

A similar annular chamber 373 and a corresponding annular slit can also be defined in one or more intermediate positions of the guiding duct of the dosed body D, for example between the two monolithic bodies 348a, 348b that form the guiding duct 341.

Through the annular slits 271, 371, 471 thus defined, it is possible to make the dosed body D slide better by way of a Coand 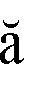 effect.

As can be seen from the embodiments described, during the passing of the dosed body D through the guiding duct 41, 141, 241, 341, 441 it is possible to generate a vortex of air or of another fluid introduced into the guiding duct 41, 141, 241, 341, 441 through the channels 46, 146, 246, 346, 446 using the fluid feeder means. Such vortex, on the basis of the inclination of the channels defined during the manufacturing of the transfer element 40, can keep the dosed body D within the guiding duct 41, 141, 241, 341, 441 or it can accelerate its expulsion from the guiding duct 41, 141, 241, 341, 441.

In the first case, the gates at the outlet 44, 144, 244, 344, 444 of the guiding duct 41, 141, 241, 341, 441 which in the known art are used to stop the fall of the dosed body within the guiding duct or to release it into the hollow female mold part 32 of the compression mold can therefore actually be omitted.

In the second case, the production speed of the line 1 can be increased with respect to the known art.

The channels 46, 146, 246, 346, 446 are substantially cylindrical, with diameter comprised between 0.01 mm and 10 mm, but because they are skewed with respect to the axis A of the guiding duct 41 they make the holes 45, 145, 245, 345a, 445a oval, elongated and inclined with respect to the horizontal.

All of the above mentioned holes 45, 145, 245, 345a, 445a, or at least most of them, can be arranged substantially along a line describing a helix along at least part of the internal tubular surface 47, 147, 247, 347, 447 of the guiding duct 41, 141, 241, 341, 441. The helix preferably has a substantially constant pitch comprised between 0.01 mm and 250 mm, for example of at least 0.1 mm, and it optionally transitions from cylindrical to conical in the upper part in line with the upper flaring of the guiding duct 41, 141, 241, 341, 441.

In general, the levels of the holes 45, 145, 245, 345a-345b, 445a-445b measured parallel to the first axis A are mutually spaced apart by between 0.01 mm and 100 mm, the distance between the centers of the holes 45, 145, 245, 345a-345b, 445a-445b at the same level is comprised between 0.01 mm and 100 mm, and the angular offset between the holes at one level and those at the subsequent or preceding level is comprised between 0° and 180°.

Each one of the channels 46, 146, 246, 346, 446 that are skewed with respect to the axis A, for example each one of the channels 46, 146, 246, 346, 446 of the flared or frustum-shaped band of the internal tubular surface 47, 147, 247, 347, 447 of the duct 41, 141, 241, 341, 441, preferably defines a first acute angle α with its projection on a first geometric plane P1 perpendicular to the axis A of the guiding duct 41, 141, 241, 341, 441 and passing through the corresponding hole 45, 145, 245, 345a, 445a and, in the examples shown, lies in the half-space comprised between this plane P1 and the inlet 43, 143, 243, 343, 443 of the guiding duct 41, 141, 241, 341, 441.

In alternative embodiments, which are not shown, the channels can instead lie in the half-space comprised between the above mentioned plane P1 and the outlet of the guiding duct.

The axis B of the skewed channels 46, 146, 246, 346, 446 further define a second acute angle β with its projection on a second geometric plane P2, tangential to the internal tubular surface 47, 147, 247, 347, 447 of the guiding duct 41, 141, 241, 341, 441 at the point where the axis B of the channel 46, 146, 246, 346, 446 intersects such tubular surface 47, 147, 247, 347, 447.

The average speed of the air in output from the holes 45, 145, 245, 345a-345b, 445a-445b can be comprised between 5 m/sec and 400 m/sec, and the overall flow-rate by mass (considering all of the holes) can be comprised between 40 Nl/min and 2000 Nl/min. Optionally, an upper nozzle can be associated with the duct 41, 141, 241, 341, 441 for expelling the dosed body D from the duct when it is kept floating.

In practice it has been found that the device according to the invention fully achieves the set aim since it makes it possible to define a vortex in the ducts that guide the doses during the transfer thereof from the extruder to the compression molds, and a function of such vortex can be to slow the descent of the dose or to accelerate the fall thereof, based on the inclination and geometry of the channels for introducing the air or other fluid into the guiding duct.

The vortex further makes it possible to prevent the dose from adhering, or to reduce the adhesion, to the walls of the guiding duct during the transfer from the extruder to the compression mold.

The device, thus conceived, is susceptible of numerous modifications and variations, all of which are within the scope of the appended claims. Moreover, all the details may be substituted by other, technically equivalent elements.

In practice, the materials employed, as well as the dimensions, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An element (40) for transferring dosed bodies of polymeric material in the melted state for compression molding lines, which comprises an internal guiding duct (41, 141, 241, 341, 441) which extends along a first axis (A) that connects an inlet (43, 143, 243, 343, 443) for a body of polymeric material in the melted state (D) to an outlet (44, 144, 244, 344, 444) of the same body, said guiding duct (41, 141, 241, 341, 441) being adapted to guide said body (D) during descent from said inlet (43, 143, 243, 343, 443) to said outlet (44, 144, 244, 344, 444), said transfer element (40) being connectable to means of feeding a fluid, preferably air, to said guiding duct, an internal tubular surface (47, 147, 247, 347, 447) of said guiding duct comprising a plurality of holes (45, 145, 245, 345a, 445a-445b) that are connected to said feeder means through respective channels (46, 146, 246, 346, 446) that pass through the side wall (48, 148, 248, 348, 448) of said duct (41, 141, 241, 341, 441), **characterized in that** at least one plurality of said channels (46, 146, 246, 346, 446) extends from the respective hole (45, 145, 245, 345a, 445a) in the side wall (48, 148, 248, 348, 448) substantially along a second axis (B, C) which is oblique with respect to said first axis of the guiding duct (A), so as to form a vortex of said fluid introduced into said guiding duct through said plurality of channels by the fluid feeder means.

2. The transfer element according to one or more of the preceding claims, wherein said second axis (B, C) forms a first acute angle (α) with its projection on a first geometric plane (P1) perpendicular to said first axis (A).

3. The transfer element according to one or more of the preceding claims, wherein said second axis (B) forms a second acute angle (β) with its projection on a second geometric plane (P2) tangential to said internal tubular surface (47, 147, 247, 347, 447) at the point where said second axis (B) intersects said internal tubular surface (47).

4. The transfer element according to one or more of the preceding claims, wherein said channels (46, 146, 246, 346, 446) are substantially cylindrical and have a diameter comprised between 0.01 and 100 mm.

5. The transfer element according to one or more of the preceding claims, wherein said holes (45, 145, 245, 345a, 445a) are arranged at levels, measured parallel to the first axis A, which are mutually spaced apart by from 0.01 to 100 mm, wherein the distance between the centers of the holes (45, 145, 245, 345a, 445a) at the same level is comprised between 0.01 mm and 100 mm and the angular offset between the holes at a given level and those at the level directly above or below along the first axis (A) is comprised between 0° and 180°.

6. The transfer element according to one or more of the preceding claims, wherein said internal tubular surface (47, 147, 247, 347, 447) of said guiding duct comprises a substantially cylindrical portion that includes said outlet (44, 144, 244, 344, 444) of the body of polymeric material, and a substantially conical portion that includes said inlet (43, 143, 243, 343, 443) of the body of polymeric material (D).

7. The transfer element according to one or more of the preceding claims, wherein said side wall (48, 148, 248, 348, 448) is a monolithic body (48, 148, 248) or comprises two coaxially superimposed monolithic bodies (348a, 348b) or comprises a monolithic body (448) and a stack (460) of flat rings, some of said flat rings (461) comprising a plurality of grooves (462) that are adapted to make said fluid of the fluid feeder means pass toward the inside of the stack (460).

8. The transfer element according to one or more of the preceding claims, wherein said internal tubular surface (347) further comprises a plurality of holes (345b) for the evacuation of the fluid which are optionally connected to means of aspirating said fluid through respective evacuation channels in order to avoid the accumulation of said fluid downstream of said outlet (344).

9. The transfer element according to one or more of the preceding claims, wherein there is, around said internal tubular surface (247, 347, 447), at least one annular slit (271, 371, 471) that is partially formed by a convex surface blended with said internal tubular surface (247, 347, 447) and connected to said fluid feeder means or to other fluid feeder means.

10. The transfer element according to one or more of the preceding claims, wherein said transfer element (40) is connected to an arm (21) of a carousel (20) that can rotate about a third axis (C) that is substantially parallel to said first axis (A).

11. A carousel (20) for transferring dosed bodies of polymeric material to the molds of a compression molding carousel (30), **characterized in that** it comprises a plurality of transfer elements (40) according to one or more of the preceding claims along the peripheral region of said transfer carousel (20).

12. A compression molding line (1) comprising a dispenser (11, 12) of dosed bodies of polymeric material, a molding carousel (30) that rotates continuously and is provided, along its peripheral region, with a plurality of molds (31), each mold (30) comprising a hollow female mold part (32) and a corresponding male plug (33), which can move toward and away from each other in order to form by compression objects inside said molds (31) starting from said dosed bodies of polymeric material (D), said line (1) being **characterized in that** it comprises the transfer carousel (20) according to the preceding claim, which rotates continuously so that the respective transfer elements (40) describe a trajectory that is partially superimposed on the trajectory described by said molds (31).

13. A method of continuous transfer of dosed bodies of polymeric material in the melted state into a hollow female mold part (32) of a movable mold (31) in a compression molding line, which comprises the steps of:
- dispensing a dosed body of polymeric material in the melted state (D);
- transferring the dosed body (D) into a substantially rectilinear guiding duct (41) that can move continuously along a substantially circular trajectory;
- passing through the guiding duct (41, 141, 241, 341, 441) on the part of the dosed body (D), during the movement of the guiding duct (41, 141, 241, 341, 441) along its substantially circular trajectory;
- releasing the dosed body (D) from the guiding duct into a hollow female mold part (32) of a compression mold (31) that can move continuously along another substantially circular trajectory on which the substantially circular trajectory of the guiding duct (41, 141, 241, 341, 441) is superimposed, the release occurring in the region of overlap of the two substantially circular trajectories;
**characterized in that** said step of passing through comprises a step of generating a vortex of fluid within said guiding duct through channels (46, 146, 246, 346, 446) that lead into said guiding duct by way of respective holes (45, 145, 245, 345a, 445a-445b) and each channel (46, 146, 246, 346, 446) extends along a respective axis (B, C) that is oblique with respect to the axis of the guiding duct (A).

## Patentansprüche

1. Element (40) zur Übertragung von dosierten Körpern aus polymerem Material im geschmolzenen Zustand für Pressformanlagen, welches einen inneren Führungskanal (41, 141, 241, 341, 441) aufweist, der sich entlang einer ersten Achse (A) erstreckt, die einen Einlass (43, 143, 243, 343, 443) für einen Körper (D) aus polymerem Material im geschmolzenen Zustand mit einem Auslass (44, 144, 244, 344, 444) für denselben Körper verbindet, wobei der Führungskanal (41, 141, 241, 341, 441) dafür ausgelegt ist, den Körper (D) während der Abwärtsbewegung von dem Einlass (43, 143, 243, 343, 443) zu dem Auslass (44, 144, 244, 344, 444) zu führen, wobei das Übertragungselement (40) mit Einrichtungen zum Zuführen eines Fluids, vorzugsweise Luft, zu dem Führungskanal verbindbar ist, wobei eine innere rohrförmige Oberfläche (47, 147, 247, 347, 447) des Führungskanals eine Vielzahl von Löchern (45, 145, 245, 345a, 445a-445b) aufweist, die mit den Zuführeinrichtungen durch jeweilige Kanäle (46, 146, 246, 346, 446) verbunden sind, die sich durch die Seitenwand (48, 148, 248, 348, 448) des Kanals (41, 141, 241, 341, 441) hindurch erstrecken, **dadurch gekennzeichnet, dass** sich mindestens eine Vielzahl von den Kanälen (46, 146, 246, 346, 446) von dem jeweiligen Loch (45, 145, 245, 345a, 445a) in der Seitenwand (48, 148, 248, 348, 448) im Wesentlichen entlang einer zweiten Achse (B, C) erstreckt, die schräg in Bezug zu der ersten Achse (A) des Führungskanals verläuft, um so einen Wirbel des Fluids zu bilden, das in den Führungskanal durch die Vielzahl von Kanälen hindurch durch die Fluidzuführeinrichtungen eingeführt wird.

2. Übertragungselement nach einem oder mehreren der vorhergehenden Ansprüche, wobei die zweite Achse (B, C) einen ersten spitzen Winkel (α) mit ihrer Projektion auf eine erste geometrische Ebene (P1) senkrecht zu der ersten Achse (A) bildet.

3. Übertragungselement nach einem oder mehreren der vorhergehenden Ansprüche, wobei die zweite Achse (B) einen zweiten spitzen Winkel (β) mit ihrer Projektion auf eine zweite geometrische Ebene (P2) tangential zu der inneren rohrförmigen Oberfläche (47, 147, 247, 347, 447) an dem Punkt bildet, an dem die zweite Achse (B) die innere rohrförmige Oberfläche (47) schneidet.

4. Übertragungselement nach einem oder mehreren der vorhergehenden Ansprüche, wobei die Kanäle (46, 146, 246, 346, 446) im Wesentlichen zylindrisch sind und einen Durchmesser von zwischen 0,01 und 100 mm haben.

5. Übertragungselement nach einem oder mehreren der vorhergehenden Ansprüche, wobei die Löcher (45, 145, 245, 345a, 445a) auf Höhen gemessen parallel zu der ersten Achse A angeordnet sind, die gegenseitig um 0,01 bis 100 mm voneinander beabstandet sind, wobei der Abstand zwischen den Mittelpunkten der Löcher (45, 145, 245, 345a, 445a) auf der gleichen Höhe bei zwischen 0,01 mm und 100 mm liegt und der Winkelversatz zwischen den Löchern auf einer bestimmten Höhe und denjenigen auf der Höhe direkt darüber oder darunter entlang der ersten Achse (A) bei zwischen 0° und 180° liegt.

6. Übertragungselement nach einem oder mehreren der vorhergehenden Ansprüche, wobei die innere rohrförmige Oberfläche (47, 147, 247, 347, 447) des Führungskanals einen im Wesentlichen zylindrischen Abschnitt, der den Auslass (44, 144, 244, 344, 444) für den Körper aus polymerem Material umfasst, und einem im Wesentlichen konischen Abschnitt aufweist, der den Einlass (43, 143, 243, 343, 443) für den Körper (D) aus polymerem Material umfasst.

7. Übertragungselement nach einem oder mehreren der vorhergehenden Ansprüche, wobei die Seitenwand (48, 148, 248, 348, 448) ein monolithischer Körper (48, 148, 248) ist oder aus zwei koaxial übereinandergelagerten monolithischen Körpern (348a, 348b) besteht oder aus einem monolithischen Körper (448) und einem Stapel (460) von flachen Ringen besteht, wobei einige der flachen Ringe (461) eine Vielzahl von Nuten (462) aufweisen, die dafür ausgelegt sind, zu veranlassen, dass das Fluid der Fluidzuführeinrichtungen zu der Innenseite des Stapels (460) hin durchfließt.

8. Übertragungselement nach einem oder mehreren der vorhergehenden Ansprüche, wobei die innere rohrförmige Oberfläche (347) des Weiteren eine Vielzahl von Löchern (345b) für den Abtransport des Fluids aufweist, die optional mit Einrichtungen zum Absaugen des Fluids durch jeweilige Evakuierungskanäle verbunden sind, um die Ansammlung von diesem Fluid stromabwärts von dem Auslass (344) zu vermeiden.

9. Übertragungselement nach einem oder mehreren der vorhergehenden Ansprüche, wobei um die innere rohrförmige Oberfläche (247, 347, 447) herum mindestens ein ringförmiger Schlitz (271, 371, 471) vorhanden ist, der teilweise durch eine konvexe Oberfläche gebildet wird, die mit der inneren rohrförmigen Oberfläche (247, 347, 447) zusammenpasst, und mit den genannten Fluidzuführeinrichtungen oder mit anderen Fluidzuführeinrichtungen verbunden ist.

10. Übertragungselement nach einem oder mehreren der vorhergehenden Ansprüche, wobei das Übertragungselement (40) mit einem Arm (21) eines Karussells (20) verbunden ist, das sich um eine dritte Achse (C) herum drehen kann, die im Wesentlichen parallel zu der ersten Achse (A) ist.

11. Karussell (20) zur Übertragung von dosierten Körpern aus polymerem Material zu den Formen eines Pressformkarussells (30), **dadurch gekennzeichnet, dass** es eine Vielzahl von Übertragungselementen (40) nach einem oder mehreren der vorhergehenden Ansprüche entlang dem peripheren Bereich des Übertragungskarussells (20) aufweist.

12. Pressformanlage (1), die eine Ausgabevorrichtung (11, 12) von dosierten Körpern aus polymerem Material und ein Formkarussell (30) aufweist, das sich kontinuierlich dreht und entlang seinem peripheren Bereich mit einer Vielzahl von Formen (31) versehen ist, wobei jede Form (30) einen hohlen weiblichen Formteil (32) und einen entsprechenden männlichen Formteil (33) aufweist, die sich aufeinander zu und voneinander weg bewegen können, um durch Pressen Objekte im Innern der Formen (31) ausgehend von den dosierten Körpern (D) aus polymerem Material zu bilden, wobei die Anlage (1) **dadurch gekennzeichnet ist, dass** sie das Übertragungskarussell nach dem vorhergehenden Anspruch aufweist, das sich kontinuierlich dreht, so dass die jeweiligen Übertragungselemente (40) eine Trajektorie beschreiben, die teilweise über der Trajektorie darübergelagert ist, die von den Formen (31) beschrieben wird.

13. Verfahren zur kontinuierlichen Übertragung von dosierten Körpern aus polymerem Material im geschmolzenen Zustand in einen hohlen weiblichen Formteil (32) einer beweglichen Form (31) in einer Pressformanlage hinein, das die folgenden Schritte aufweist:
Abgeben eines dosierten Körpers (D) aus polymerem Material im geschmolzenen Zustand;
Übertragen des dosierten Körpers (D) in einen im Wesentlichen geradlinigen Führungskanal (41) hinein, der sich kontinuierlich entlang einer im Wesentlichen kreisförmigen Trajektorie bewegen kann;
Durchwandern durch den Führungskanal (41, 141, 241, 341, 441) seitens des dosierten Körpers (D) während der Bewegung des Führungskanals (41, 141, 241, 341, 441) entlang seiner im Wesentlichen kreisförmigen Trajektorie;
Ausgeben des dosierten Körpers (D) aus dem Führungskanal in ein hohles weibliches Formteil (32) einer Pressform (31), die sich kontinuierlich entlang einer anderen im Wesentlichen kreisförmigen Trajektorie bewegen kann, über der die im Wesentlichen kreisförmige Trajektorie des Führungskanals (41, 141, 241, 341, 441) darübergelagert ist, wobei die Ausgabe in dem Bereich der Überlappung der zwei im Wesentlichen kreisförmigen Trajektorien erfolgt;
**dadurch gekennzeichnet, dass** der Schritt des Durchwanderns einen Schritt des Erzeugens eines Wirbels eines Fluids innerhalb des Führungskanals durch Kanäle (46, 146, 246, 346, 446) aufweist, die in den Führungskanal über jeweilige Löcher (45, 145, 245, 345a, 445a-445b) führen, und sich jeder Kanal (46, 146, 246, 346, 446) entlang einer jeweiligen Achse (B, C) erstreckt, die schräg in Bezug zu der Achse des Führungskanals (A) verläuft.

## Revendications

1. Elément (40) pour transférer des corps dosés de matériau polymère à l'état fondu pour des lignes de moulage par compression, qui comprend un conduit de guidage interne (41, 141, 241, 341, 441) qui s'étend le long d'un premier axe (A) qui raccorde une entrée (43, 143, 243, 343, 443) pour un corps de matériau polymère à l'état fondu (D) à une sortie (44, 144, 244, 344, 444) du même corps, ledit conduit de guidage (41, 141, 241, 341, 441) étant adapté pour guider ledit corps (D) pendant la descente de ladite entrée (43, 143, 243, 343, 443) à ladite sortie (44, 144, 244, 344, 444), ledit élément de transfert (40) pouvant être raccordé, au moyen de l'alimentation d'un fluide, de préférence de l'air, audit conduit de guidage, une surface tubulaire interne (47, 147, 247, 347, 447) dudit conduit de guidage comprenant une pluralité de trous (45, 145, 245, 345a, 445a-445b) qui sont raccordés auxdits moyens d'alimentation par le biais de canaux (46, 146, 246, 346, 446) respectifs qui passent par la paroi latérale (48, 148, 248, 348, 448) dudit conduit (41, 141, 241, 341, 441), **caractérisé en ce qu'**au moins une pluralité desdits canaux (46, 146, 246, 346, 446) s'étend à partir du trou (45, 145, 245, 345a, 445a) respectif dans la paroi latérale (48, 148, 248, 348, 448) sensiblement le long d'un deuxième axe (B, C) qui est oblique par rapport audit premier axe du conduit de guidage (A), afin de former un tourbillon dudit fluide introduit dans ledit conduit de guidage par ladite pluralité de canaux par les moyens d'alimentation en fluide.

2. Elément de transfert selon une ou plusieurs des revendications précédentes, dans lequel ledit deuxième axe (B, C) forme un premier angle aigu (α) avec sa projection sur un premier plan géométrique (P1) perpendiculaire audit premier axe (A).

3. Elément de transfert selon une ou plusieurs des revendications précédentes, dans lequel ledit deuxième axe (B) forme un second angle aigu (β) avec sa projection sur un second plan géométrique (P2) tangentiel à ladite surface tubulaire interne (47, 147, 247, 347, 447) au point où ledit deuxième axe (B) coupe ladite surface tubulaire interne (47).

4. Elément de transfert selon une ou plusieurs des revendications précédentes, dans lequel lesdits canaux (46, 146, 246, 346, 446) sont sensiblement cylindriques et ont un diamètre compris entre 0,01 et 100 mm.

5. Elément de transfert selon une ou plusieurs des revendications précédentes, dans lequel lesdits trous (45, 145, 245, 345a, 445a) sont agencés à des niveaux, mesurés parallèlement au premier axe A, qui sont mutuellement espacés de 0,01 à 100 mm, dans lequel la distance entre les centres des trous (45, 145, 245, 345a, 445a) au même niveau est comprise entre 0,01 mm et 100 mm et le décalage angulaire entre les trous à un niveau donné et ceux au niveau directement au-dessus ou au-dessous le long du premier axe (A) est compris entre 0° et 180°.

6. Elément de transfert selon une ou plusieurs des revendications précédentes, dans lequel ladite surface tubulaire interne (47, 147, 247, 347, 447) dudit conduit de guidage comprend une partie sensiblement cylindrique qui comprend ladite sortie (44, 144, 244, 344, 444) du corps de matériau polymère et une partie sensiblement conique qui comprend ladite entrée (43, 143, 243, 343, 443) du corps de matériau polymère (D).

7. Elément de transfert selon une ou plusieurs des revendications précédentes, dans lequel ladite paroi latérale (48, 148, 248, 348, 448) est un corps monolithique (48, 148, 248) ou comprend deux corps monolithiques (348a, 348b) superposés de manière coaxiale ou comprend un corps monolithique (448) et un empilement (460) d'anneaux plats, certains desdits anneaux plats (461) comprenant une pluralité de rainures (462) qui sont adaptées pour que ledit fluide des moyens d'alimentation en fluide passe vers l'intérieur de l'empilement (460).

8. Elément de transfert selon une ou plusieurs des revendications précédentes, dans lequel ladite surface tubulaire interne (347) comprend en outre une pluralité de trous (345b) pour l'évacuation du fluide qui sont facultativement raccordés au moyen de l'aspiration dudit fluide par des canaux d'évacuation respectifs afin d'éviter l'accumulation dudit fluide en aval de ladite sortie (344).

9. Elément de transfert selon une ou plusieurs des revendications précédentes, dans lequel il y a, autour de ladite surface tubulaire interne (247, 347, 447), au moins une fente annulaire (271, 371, 471) qui est partiellement formée par une surface convexe mélangée avec ladite surface tubulaire interne (247, 347, 447) et raccordée auxdits moyens d'alimentation en fluide ou à d'autres moyens d'alimentation en fluide.

10. Elément de transfert selon une ou plusieurs des revendications précédentes, dans lequel ledit élément de transfert (40) est raccordé à un bras (21) d'un carrousel (20) qui peut tourner autour d'un troisième axe (C) qui est sensiblement parallèle audit premier axe (A).

11. Carrousel (20) pour transférer des corps dosés de matériau polymère dans des moules d'un carrousel de moulage par compression (30), **caractérisé en ce qu'**il comprend une pluralité d'éléments de transfert (40) selon une ou plusieurs des revendications précédentes, le long de la région périphérique dudit carrousel de transfert (20) .

12. Ligne de moulage par compression (1) comprenant un distributeur (11, 12) de corps dosés de matériau polymère, un carrousel de moulage (30) qui tourne de manière continue et est prévu, le long de sa région périphérique, avec une pluralité de moules (31), chaque moule (30) comprenant une partie de moule femelle creuse (32) et une partie mâle (33) correspondante, qui peuvent se rapprocher et s'éloigner afin de former, par compression, des objets à l'intérieur desdits moules (31) à partir desdits corps dosés de matériau polymère (D), ladite ligne (1) étant **caractérisée en ce qu'**elle comprend le carrousel de transfert (20) selon la revendication précédente, qui tourne de manière continue de sorte que les éléments de transfert (40) respectifs décrivent une trajectoire qui est partiellement superposée sur la trajectoire décrite par lesdits moules (31) .

13. Procédé pour transférer de manière continue des corps dosés de matériau polymère à l'état fondu dans une partie de moule femelle creuse (32) d'un moule mobile (31) dans une ligne de moulage par compression, qui comprend les étapes consistant à :
distribuer un corps dosé de matériau polymère à l'état fondu (D) ;
transférer le corps dosé (D) dans un conduit de guidage (41) sensiblement rectiligne qui peut se déplacer de manière continue le long d'une trajectoire sensiblement circulaire ;
traverser le conduit de guidage (41, 141, 241, 341, 444) sur la partie du corps dosé (D), pendant le déplacement du conduit de guidage (41, 141, 241, 341, 441) le long de sa trajectoire sensiblement circulaire ;
libérer le corps dosé (D) du conduit de guidage dans une partie de moule femelle creuse (32) d'un moule de compression (31) qui peut se déplacer de manière continue le long d'une autre trajectoire sensiblement circulaire sur laquelle la trajectoire sensiblement circulaire du conduit de guidage (41, 141, 241, 341, 441) est superposée, la libération ayant lieu dans la région de chevauchement des deux trajectoires sensiblement circulaires ;
**caractérisé en ce que** ladite étape de traversée comprend une étape consistant à générer un tourbillon de fluide à l'intérieur desdits canaux débouchants de conduit de guidage (46, 146, 246, 346, 446) qui mènent dans ledit conduit de guidage au moyen de trous (45, 145, 245, 345a, 445a-445b) respectifs et chaque canal (46, 146, 246, 346, 446) s'étend le long d'un axe (B, C) respectif qui est oblique par rapport à l'axe du conduit de guidage (A).
